(19) **Europäisches Patentamt / European Patent Office / Office européen des brevets**

(11) **EP 1 816 818 A1**

(12) **EUROPEAN PATENT APPLICATION**

(43) Date of publication:
**08.08.2007 Bulletin 2007/32**

(51) Int Cl.:
***H04L 27/26*** *(2006.01)*

(21) Application number: **06300097.0**

(22) Date of filing: **01.02.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Sailer, Dr. Erhard**<br>**71229, Leonberg (DE)**<br>• **Otterbach, Jürgen**<br>**70499, Stuttgart (DE)**<br><br>(74) Representative: **Wetzel, Emmanuelle**<br>**Alcatel Lucent**<br>**Intellectual Property & Standards**<br>**70430  Stuttgart (DE)** |
| (71) Applicant: **Alcatel Lucent**<br>**75008 Paris (FR)** | |
| (72) Inventors:<br>• **Halbauer, Hardy**<br>**76275, Ettlingen (DE)** | Remarks:<br>Amended claims in accordance with Rule 86 (2) EPC. |

(54) **Symbol timing estimation in OFDMA systems**

(57)     A method for detecting symbol timing in an OFDMA system is described, wherein a sub-channel comprises several groups (1) of sub carriers (2) spread over the frequency band, each group (1) of sub carriers (2) comprising at least one pilot carrier (4), said method comprising the steps of:
correcting the received pilot sub carriers (4) with a set of different time shifts, calculating the standard deviation of the corrected pilot sub carriers (4) for each time shift, selecting the time shift showing the minimum standard deviation, and
applying said time shift to received data sub carriers (5) on said sub-channel. Furthermore a OFDMA base station to be used to execute the method mentioned above, plus a computer program product causing a computer to perform said method is described.

**Description**

Background of the invention:

The invention relates to Orthogonal Frequency Division Multiple Access (OFDMA) burst transmission systems using multiple non-adjacent groups of sub carriers per OFDMA subscriber station (SS) with pilot signals within each sub carrier group for assisting time synchronization and channel estimation. More precisely the invention relates to a method for detecting symbol timing in such an OFDMA system.

In particular the uplink of the currently evolving WiMAX (Worldwide Interoperability for Microwave Access) systems according to the IEEE 802.16e standard or the Chinese WIBRO (Wireless Broadband) standard are such systems.

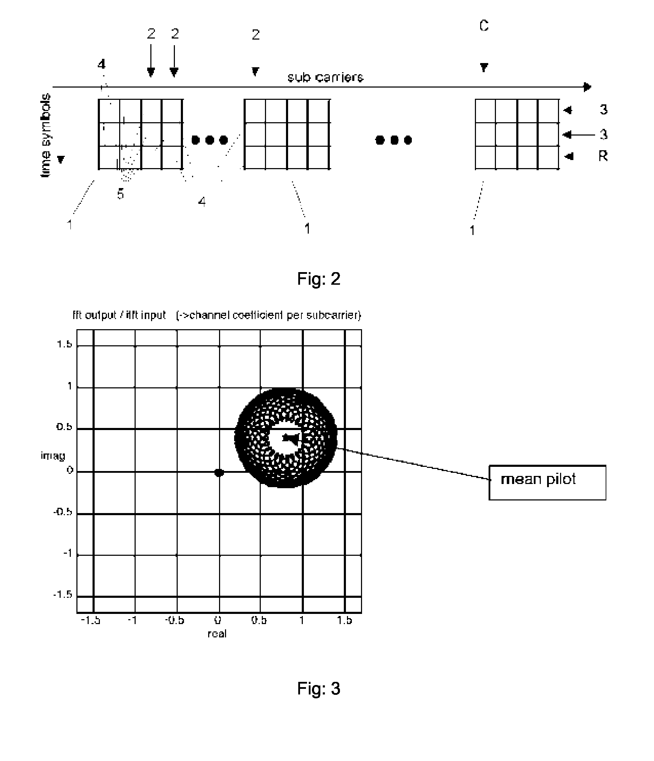

IEEE 802.16e defines an OFDMA burst transmission physical layer using multiple non-adjacent groups 1 of sub carriers 2 per SS with pilot sub carriers 4 within each sub carrier group 1 (Fig. 2). Those non-adjacent groups are also called tiles. Six tiles 1 form a sub-channel, wherein each sub-channel is assigned to a SS. Also multiple sub-channels can be assigned to the same SS. Each tile 1 comprises four adjacent sub carriers 2 and three time symbols 3. Each tile 1 comprises four pilot sub carriers 4. The remaining sub carriers 2 in each sub carrier group 1 are data sub carriers 5.

The sub carriers 2, i.e. the data sub carriers 5 and the pilot sub carriers 4, which form a sub-channel, are spread over the frequency band, wherein sub carriers 2 assigned to a tile 1 always are adjacent sub carriers 2. In Fig. 2 the sub carriers 2 having different frequencies and belonging to the same time symbol 3 form a row R, wherein succeeding sub carriers 2, i.e. sub carriers 2 belonging to different time symbols 3, having the same frequency form a column C.

For signal transmission at the transmitter side of the SS, all sub carriers for one row R in one time symbol are transformed into time domain using e.g. an inverse Fast Fourier Transformation (IFFT).

To achieve demodulation of the incoming time domain OFDMA signal comprising a plurality of sub-channels, at receiver side a Fast Fourier Transformation (FFT) has to be performed. To achieve maximum performance at FFT output, perfect symbol timing, i.e. a perfect synchronization between beginning and ending of the sampling per time symbol at the receiver side and the beginning and ending of the time symbols in the received OFDMA signal has to be performed by a timing estimation and timing tracking algorithm or procedure.

The FFT is performed in order to obtain the values magnitude and phase of the received, analog symbols of each sub carrier independently from the frequency of the particular sub carrier. The values magnitude and phase - in the following just called values - can be displayed as real and imaginary part in the complex number plane in a way that the magnitude is displayed as the distance from the origin of the complex number plane and the phase is displayed as the angle versus positive real axis. In the following it is not differentiated between the sub carriers and the analog symbols of the sub carriers, i.e. the values of the sub carriers, if not mentioned explicit by using the term value.

OFDMA sub carriers usually have a cyclic extension, the so called cyclic prefix (CP), which allows FFT and demodulation even in case of non-ideal symbol timing adjustment. In IEEE 802.16e standard, this CP length is defined to be 1/8 of the OFDMA time symbol. This means that the number of samples per time symbol is larger than the FFT window size. Due to this, the signal can be correctly transformed and demodulated using FFT, as long as the symbol timing error is less than 1/8 of the time symbol duration. Symbol timing errors within the CP lead to a phase rotation of the resulting values of the sub carriers. Symbol timing errors larger than CP cause signal distortion due to inter-carrier interference. Ideal symbol timing is achieved, if the FFT uses samples between the end of the CP and the end of the time symbol.

Since in non line of sight propagation conditions so called multi-path effects occur due to echo and the like causing different transmission lines between transmitter and receiver showing different delay and different attenuation, it is not straightforward to detect the optimal position of the FFT window in relation to the time symbol under this conditions. In this case symbol timing has to be derived from the received data sub carriers and pilot sub carriers available in the OFDMA signal.

As each SS has an individual timing error, e.g. due to tolerances in individual ranging procedure, a precise correction of the time shift at the Base Station (BS) is mandatory. As a BS receives signals from several SSs that are all supposed to be within a timing tolerance, an exact synchronization of the BS with the SSs is not possible. Therefore the BS will have to correct the data sub carriers of the individual SSs on a per SS basis. Also in case of mobile SS the symbol timing variation has to be monitored, to allow correction of the SS symbol timing, i.e. the individual ranging, before the allowed tolerances are violated.

Thereby the problem arises, that actually no solution is known to detect and/or to track symbol timing in OFDMA systems, particularly to correct symbol timing in OFDMA systems with multi-path effects.

Furthermore it has to be considered that evolving WiMAX systems and systems according to IEEE802.16 need high performance at reasonable complexity.

Object of the invention:

An object of the invention is to find a remedy for this problem.

Disclosure of the invention and its advantages:

The object of the invention is met by the proposed method for detecting symbol timing in an OFDMA system, wherein a sub-channel comprises several groups of sub carriers spread over the frequency band, each group of sub carriers comprising at least one pilot carrier, said method comprising the steps of:

- Determining a mean pilot that is the average of all magnitudes and phase angels of the received pilot sub carriers belonging to the same sub-channel.
- Correcting the received pilot sub carriers with a set of different time shifts.
- Calculating the standard deviation of the corrected pilot sub carriers from the mean pilot for each time shift.
- Selecting the time shift showing the minimum standard deviation for all pilot sub carriers from the mean pilot.
- Applying said time shift showing the minimum standard deviation to the received data sub carriers on said sub-channel.

The correction is performed per sub-channel, and preferably per SS if more than one sub-channel is assigned to a SS, i.e. all pilot sub carriers belonging to the same sub-channel and preferably all pilot sub carriers belonging to the same SS are considered when determining the time shift showing the minimum standard deviation. The standard deviation from the mean pilot sub carrier is calculated among the time shifted pilot sub carriers of the sub carrier groups of each sub-channel for each individual time shift of the set of time shifts. The set of time shifts comprises different time shifts in constant intervals. The size of the intervals directly influences the exactness of the determined time shift showing the minimum standard deviation among the corrected pilots. Selecting small intervals improves this exactness, but increases complexity, wherein selecting large intervals reduces complexity, but also reduces exactness of the determined minimum. The time shift showing the minimum standard deviation to the mean pilot sub carrier is applied to the data sub carriers of the SS. Applying this time shift on the sub carriers, particularly on the data sub carriers within this sub-channel, preferably takes place by calculating individual correction factors for all sub carriers, wherein the individual correction factors are directly depending on the sub carrier frequency and the determined time shift showing the minimum standard deviation.

Said method according to the invention has the advantage over the state of the art, that it provides a higher performance in presence of multi-path effects. This is because according to the invention an average time shift for the whole sub-channel or for all sub-channels belonging to the same SS is determined. Such an average time shift also averages sub carrier specific multi-path effects such as frequency depending delay and attenuation.

In general it is also thinkable to perform a method according to the invention by calculating channel estimates per pilot sub carrier and by determining a mean pilot channel estimate, instead of regarding the pilot sub carriers, i.e. their values, and determining a mean pilot. In this case, the method according to the invention is performed as follows:

- calculation of channel estimates for all pilot sub carriers of a SS.
- Calculating a mean pilot channel estimate.
- Correcting the received pilot sub carrier channel estimates with a set of different time shifts.
- Calculating the standard deviation for all corrected pilot sub carrier channel estimates from the mean pilot channel estimate for each time shift.
- Selecting the time shift showing the minimum standard deviation for all pilot sub carrier channel estimates from the mean pilot channel estimate.
- Applying said time shift showing the minimum standard deviation to the received data sub carriers on said sub-channel.

Thereby a channel estimate of a pilot sub carrier is the quotient of the received values of the sub carrier to the known value of the pilot sub carrier at the transmitter. Doing so is of particular interest, if a modulation of the pilot sub carriers with randomly selected values '+1' and '-1' is performed according to IEEE802.16e standard. By regarding the channel estimates, the modulation is filtered. Again, if more than one sub-channel is assigned to a SS, all pilot sub carrier estimates are considered for determining the mean pilot channel estimate.

In a preferred embodiment of said invention, correcting the received pilot sub carriers or the calculated pilot sub carrier channel estimates with a set of different time shifts, calculating the standard deviation of the corrected pilot carriers or the calculated pilot sub carrier channel estimates for each time shift, selecting the time shift showing the minimum standard deviation, and applying said time shift to the received data sub carriers is performed per SS instead of per channel. Thereby all sub-channels assigned to a particular subscriber station are considered, instead of an individual consideration per sub-channel. Doing so, it is achieved to use the pilot carriers of all sub-channels belonging to the same SS to derive the actual symbol timing. This increases reliability of the determined time shift.

In another preferred embodiment of said invention, the set of different time shifts used to correct the pilot signals lies within an expected tolerance. The tolerance within an OFDMA system is defined as a fraction of the duration of a time symbol, e.g. 1/64 of the time symbol duration. Regarding this example, the set of time shifts comprises time shifts

from $\pm$ 1/64 of the symbol duration applied on the receiving time of the symbols to determine the actual symbol timing. Doing so, time shifts outside the tolerance are not considered and the complexity to calculate the standard deviation is reduced.

In a particularly preferred embodiment of said invention, a FFT is performed in order to transfer and to treat the pilot sub carriers and preferably also the data sub carriers in the complex number plane before calculating the standard deviation of the corrected pilot sub carriers for each time shift. Thereby treating the sub carriers comprises e.g. the determination of the mean pilot as well as applying the set of time shifts to the pilot sub carriers.

In another preferred embodiment of said invention, applying said time shift to the received data sub carriers is either done by shifting the FFT window to the appropriate position given by the selected time shift showing the minimum standard deviation, or the FFT output is corrected with the selected time shift showing the minimum standard deviation.

In a preferred embodiment of said invention, first of all the modulation of the pilot sub carriers is removed, e.g. by multiplying the pilot sub carriers with their nominal values +1 or -1, with which they are modulated e.g. in the IEEE802.16e standard, before the mean pilot is determined and before the pilot sub carriers are corrected with the set of different time shifts. According to the IEEE802.16e standard, the pilot sub carriers, originally having the values (1,0i) in the complex number plane, i.e. a magnitude of 1 1. Multiplying the received pilot sub carriers with ($\pm$1,0i) according to $\pm$ the known random sequence ensures a positive magnitude without changing the phase of the received pilot sub carriers. Applying this procedure, the resulting values of the pilot sub carriers are identical with the pilot sub carrier channel estimates. Therefore, instead of the pilot sub carrier channel estimates, also the values of the received pilot sub carriers can be used if a modulation according to IEEE 802.16e standard is performed on the transmitter side.

In an additional preferred embodiment of said invention, a fine correction for the symbol timing is performed in order to correct deviations caused by sample inaccuracy in the order of a fraction of the sampling interval.

In another additional preferred embodiment of said invention, the fine correction is obtained using the slope of the linear regression of the phase angles of the pilot sub carriers vs. the sub carrier frequency, after the correction with the time shift showing the minimum standard deviation and having only sample accuracy is performed in a previous step.

In a particularly preferred embodiment of said invention, to fine correct, the coarse time corrected pilot sub carriers are rotated around the origin with the inverse phase angle of the mean pilot, or the mean pilot channel estimate if the channel estimates are considered, in order to have their mean value on the positive real axis before determining the slope of the linear regression of the phase angles vs. the sub carrier frequency. Thereby the mean value is the statistical average value of all pilot sub carriers present doing mean or so called average calculation. The mean value is identic to the mean pilot. Doing so, the advantage is achieved that common lookup tables and tools can be used to determine the slope of the phase signal vs. the sub carrier frequency without the risk of an ambiguity at 180°.

In a preferred embodiment of said invention, to fine correct, the slope of the imaginary parts of the pilot sub carriers vs. frequency is used instead of the slope of the phase angles.

In another preferred embodiment of said invention, fine correction takes place by determining and applying said fine correction after determining and applying the time shift showing the minimum standard deviation to the received data sub carriers. Applying said fine correction preferably takes place by either shifting the FFT window to the appropriate position given by the selected time shift showing the minimum standard deviation plus the determined fine correction, or by correcting the FFT output with the selected time shift showing the minimum standard deviation plus the determined fine correction.

In a particularly preferred embodiment of said invention, during transmission, the symbol timing is monitored and tracked on the receiver side in order to detect, if the symbol timing exceeds a given tolerance, and in case of exceeding a given tolerance, symbol timing, i.e. ranging is adjusted on the transmitter side. During transmission, the symbol timing has to be monitored and tracked on the receiver side in order to adjust the ranging on the transmitter side, if given tolerances are exceeded. So the actual symbol timing has to be detected with an accuracy higher than the adjustment steps and the given tolerance for operation. Thereby the term ranging as defined e.g. in the IEEE 802.16e standard describes the adaption of symbol timing to the actual distance between a BS and a SS. If one of both moves, ranging has to be adapted continuously or step by step in intervals.

Another aspect of the invention concerns an OFDMA base station to be used to execute the method mentioned above, said OFDMA base station comprising:

- means to correct the received pilot carriers with a set of different time shifts,
- means to calculate the standard deviation of the corrected pilot carriers for each time shift,
- means to select the time shift showing the minimum standard deviation for all pilot sub carriers from the mean pilot, and
- means to apply said time shift showing the minimum standard deviation to received symbols on said sub-channel.

A preferred embodiment of said OFDMA base station comprises means to perform a FFT before determining the mean pilot and correcting the received pilot carriers with the set of different time shifts.

In another preferred embodiment of the invention, said method mentioned above is performed by a computer program product stored on a computer usable medium comprising computer readable program means for causing a computer to perform the method mentioned above, when said computer program product is executed on a computer.

Brief description of the drawings, with

Fig. 1 showing a schematic flowchart of a method according to the invention,

Fig. 2 showing a schematic view of the structure of an OFDMA sub-channel,

Fig. 3 showing a diagram showing schematically the locations of pilot sub carriers in the complex plane in presence of multi-path effects and ideal timing,

Fig. 4 showing a diagram showing schematically the locations of pilot sub carriers in the complex plane in presence of multi-path effects and non-ideal timing,

Fig. 5 showing a diagram showing the standard deviation of pilot sub carrier values from the mean pilot for different time shifts, and

Fig. 6 showing a schematic view of the structure of a group of sub carriers, i.e. of a tile.

Detailed description of the drawings:

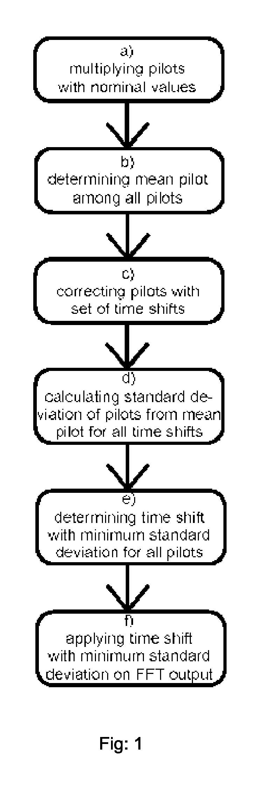

A method according to the invention is executed in the following way (Fig. 1):

First of all, a FFT is performed in order to get the values magnitude and phase of the received sub carriers, i.e. of the pilot sub carriers and the data sub carriers independently from the frequency of the particular sub carrier. The values can be displayed in the complex number plane in a way that the magnitude is displayed as the distance from the origin of the complex number plane and the phase is displayed as the angle versus positive real axis.

After the FFT, in a first step a), the received pilot sub carriers are multiplied with their nominal values '+1' or '-1' in order to bring each of them to a nominal value of '1' by removal of the modulation on the pilot sub carrier applied in the transmitter.

In a second step b) a mean pilot is determined by calculating the average magnitude of all received pilot sub carriers and calculating the average phase angle of all received pilot sub carriers. Both, the average magnitude and the average phase angle form the mean pilot by representing its position in the complex number plane.

In a third step c), for finding the optimum correction, these normalized pilot sub carriers are corrected for all possible time shifts within an expected tolerance that is up to 1/64 of the duration of a time symbol. All those possible time shifts are comprised in a set of different time shifts, wherein the different time shifts differ from each other by constant intervals.

In a fourth step d), for each time shift the standard deviation of the corrected pilot carriers from the mean pilot is calculated.

In a fifth step e), the time shift showing the minimum standard deviation for all pilot sub carriers from the mean pilot is determined.

In a sixth step f), the FFT output of all data and pilot sub carriers is corrected with the time shift corresponding to the minimum standard deviation. Alternatively it is thinkable to shift the FFT window to the appropriate position given by the selected time shift showing the minimum standard deviation.

Because in real cases the time shift determined in step d) still can deviate from the optimum time shift by a fraction of the sampling interval, in an alternative additional seventh step g) (not shown), the pilot carriers that are treated according to the second step c) are rotated around the origin to have their mean value on the positive real axis. Thereby the fine correction for the symbol timing is obtained from the slope of the linear regression of the phase angle of these rotated pilots vs. sub carrier frequency. It is also thinkable to use the imaginary part of these pilot carriers vs. frequency.

In an alternative additional eighth step h) (also not shown), the FFT output of all data and pilot sub carriers that is already corrected with the time shift corresponding to the minimum standard deviation is again corrected using the fine tuning determined in step g).

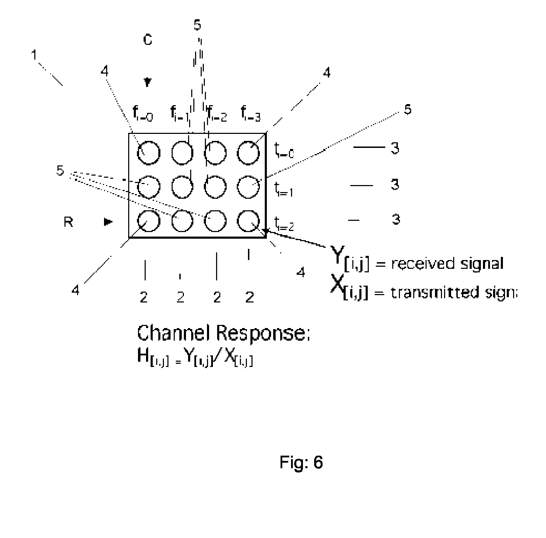

How to determine the time shift showing the minimum standard deviation and how to apply this time shift to the data sub carriers best can be understood regarding Fig. 6 showing a tile 1 of a sub-channel. The tile 1 comprises four columns C, each one belonging to sub carriers 2 having the same frequency $f_i$ and three rows R belonging to three succeeding time symbols 3 lying in succeeding time intervals $t_j$. The pilot sub carriers 4 are arranged in the corners of the tile 1. The data sub carriers 5 are arranged between the pilot sub carriers 4.

The values of a received sub carriers differ from the values of the same sub carrier when transmitting it due to attenuation and phase shift, i.e. the values of the sub carriers at the receiver differ from the values the sub carriers had at the transmitter. Since the receiver knows the values $X_{[i,j]}$ of the transmitted pilot sub carriers 4 in advance, it is possible to calculate a channel response $H_{[i,j]}$ taking into account the values $X_{[i,j]}$ of the transmitted pilot sub carriers 4 and the values $Y_{[i,j]}$ of the received pilot sub carriers 4 according to:

$$H_{[i,j]} = Y_{[i,j]} / X_{[i,j]} ,$$

wherein the indices i, j are symbolizing the position of the sub carrier in the tile according to its row R and its column C. The channel response $H_{[i,j]}$ is also called channel estimate. For each different time shift, the channel response $H_{[i,j]}$ of each pilot sub carrier 4 differs.

Regarding the description above, it can be seen that it is also possible to perform a method according to the invention by the following steps:

- Calculation of channel estimates for all pilot sub carriers belonging to the same sub-channel.
- Calculating a mean pilot channel estimate from all channel estimates of pilot sub carriers belonging to the same sub-channel.
- Correcting the received pilot sub carrier channel estimates with a set of different time shifts.
- Calculating the standard deviation of the corrected pilot sub carrier channel estimates from the mean pilot channel estimate for each time shift.
- Selecting the time shift showing the minimum standard deviation.
- Applying said time shift showing the minimum standard deviation to the received data sub carriers on said sub-channel.

According to the invention, the time shift is chosen showing the minimum standard deviation for all pilot sub carrier channel estimates from the mean pilot sub carrier channel estimate. This time shift is applied to all data sub carriers belonging to the same sub-channel, or if more than one sub-channel is assigned to a SS, this time shift is applied to all data sub carriers belonging to the same SS, wherein the mean pilot channel estimate is calculated among all channel estimates of the pilot sub carriers belonging to the same SS.

The detection of the symbol timing according to the invention that is described in the following is based on the definition of terms for the FFT mentioned below:

- FFT size $N_{fft}$

$$\text{(e.g. } N_{fft} = 1024)$$

- sampling interval:

$$\text{sampling\_interval} = 1/( N_{fft} * N_{oversampling} )$$

- frequency difference between sub carriers:

$$\text{delta\_f} = 1/(N_{fft} * N_{oversampling}).$$

- time shift between symbol start and FFT start:

$$\text{delta\_t (in units of sampling\_interval)}$$

- frequency relative to DC sub carrier:

$$\text{f\_subcarr (in units of delta\_f)}$$

Each timing shift of delta_t sampling intervals causes a phase rotation of the $n^{th}$ sub carrier signal according to
$$\text{phase(n)} = \exp(-i * 2 * pi * \text{delta\_t} * \text{f\_subcarr(n)}),$$

with pi being the Ludolph's Constant 3,14159.... and n being the sub carrier index that is defined by the position of the sub carrier in the frequency band.
In the following, the values, i.e. phase and magnitude of the received pilot sub carriers of one SS are considered. When corrected for the time shift, all pilot sub carriers have their nominal values. If the received pilot sub carriers are multiplied with their nominal values, the resulting value of the magnitude of each pilot sub carrier is ideally '1'. If multipath effects are present, the positions of the pilot sub carriers belonging to one SS, multiplied with their nominal value, are located on a curve as shown in Fig. 3, wherein an ideal timing is assumed.
If the locations of pilot carriers are analyzed for different timing shifts, it turns out that the optimum time shift to be applied corresponds with the minimum of the standard deviation of the pilot carriers from their mean value. It has been proven by simulation, that the pilots of three sub-channels, i.e. 18 tiles are sufficient to find reliably a unique minimum even at very low signal-to-noise ratios (SNRs) below the operating threshold.
To estimate the optimum symbol timing according to the invention, the procedure is as follows (compare with Fig. 1):

1. The pilots are multiplied with their nominal values (+1 or -1) in order to bring each of them to a nominal value of 1 (Step a)).
2. For finding the optimum correction, these normalized pilot sub carriers are corrected for all possible time shifts delta_t within the expected tolerances, e.g. up to 1/64 of the symbol duration, by multiplying with the factors:

$$\text{phase\_corr(n, delta\_t)} = \exp(i * 2 * pi * \text{delta\_t} * \text{f\_subcarr(n)}),$$

wherein n is the sub carrier index (Step b)).
3. For each time shift delta_t , the standard deviation of the corrected pilots is calculated (Step c)) and
4. The time shift with the minimum standard deviation is detected (Step d)).
5. The time shift with the minimum standard deviation is applied to the received data sub carriers either by shifting the FFT window to the appropriate position given by the selected time shift showing the minimum standard deviation, or by correcting the FFT output with the selected time shift showing the minimum standard deviation.

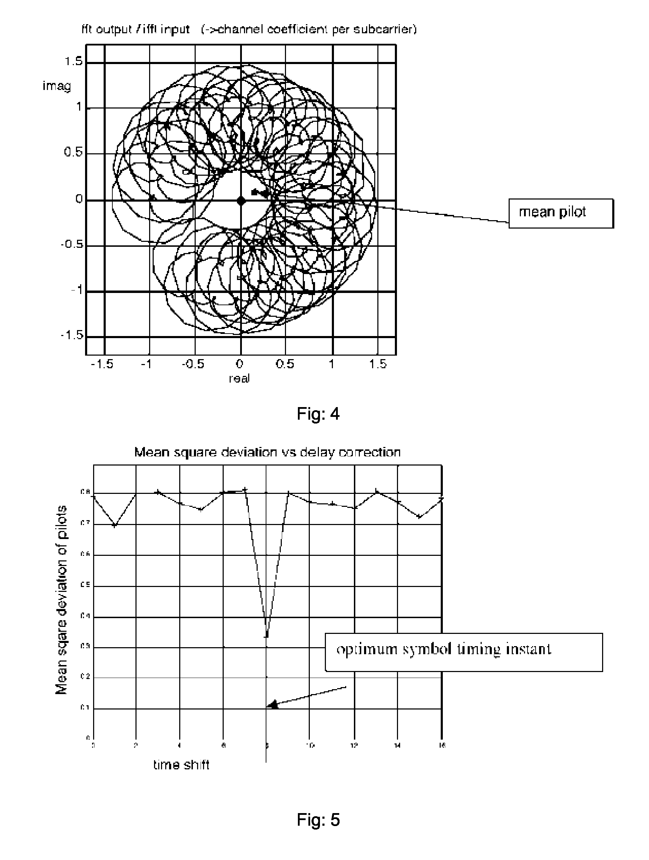

An example for the standard deviation for different time shifts is given in Fig. 5. showing the standard deviation of the pilot sub carriers for different time shifts. Even under very poor conditions where no reasonable data transmission is possible, as assumed in the example shown in Fig. 5, a clear minimum standard deviation, indicating the optimal symbol timing instant, is found (strong multi-path channel, SNR = 0dB).

In real cases the time shift still can deviate from the optimum time shift delta_t by a fraction of sampling_interval. In order to correct this the pilot carriers treated according to Step b) have to be rotated around the origin to have their mean value on the positive real axis, wherein a fine correction for the timing is obtained from the slope of the linear regression of the phase angle of these rotated pilots vs. sub carrier frequency. Finally, with the time shift delta_t corresponding to the minimum standard deviation and the above fine tuning, the FFT output of all data and pilot sub carriers are corrected.

With the described method according to the invention, the following advantages are achieved:

- A symbol timing fine correction of a multi-user OFDMA signal at an OFDMA base station is achieved.
- An information for monitoring and tracking the symbol timing and due to this the ranging can be derived directly with high accuracy.
- A better usage of already available pilot carrier overhead in the transmitted signal is achieved.
- The method according to the invention is independent of a standard, as long as multiple groups of sub carriers are assigned to individual OFDMA subscriber stations.

It is important to mention, that the method according to the invention can also be used in combination with advanced equalization algorithms requiring perfect symbol timing.

It is important to mention that the time symbol of the OFDMA signal usually is enlarged by a CP to compensate multi-path effects in non line of sight conditions. Due to the CP, the demodulation can be performed even in presence of shifts in symbol timing, as long as they are within the length of the CP. In this case, the influence of the timing error is a phase rotation of each sub carrier proportional to its sub carrier index. IEEE 802.16e standard requires an allowed timing tolerance for each SS of 1/2 minimum CP, which means 1/64 of the symbol time duration. Other FFT sizes also are supported by this invention.

Commercial applicability:

The invention is commercially applicable particularly in the field of production and operation of networks for wireless communication and data transmission.

## Claims

1. Method for detecting symbol timing in an OFDMA system, wherein a sub-channel comprises several groups (1) of sub carriers (2) spread over the frequency band, each group (1) of sub carriers (2) comprising at least one pilot carrier (4), said method comprising the steps of:

   - determining a mean pilot from all received pilot sub carriers (4) belonging to the same sub-channel,
   - correcting the received pilot sub carriers (4) with a set of different time shifts,
   - calculating the standard deviation of the corrected pilot sub carriers (4) from the mean pilot for each time shift,
   - selecting the time shift showing the minimum standard deviation, and applying said time shift to correct received data sub carriers (5) on said sub-channel.

2. Method according to claim 1, **characterized in that** instead of the pilot sub carriers (4) their channel estimates ($H_{[i,j]}$) are considered by performing the following steps:

   - calculation of channel estimates ($H_{[i,j]}$) for all pilot sub carriers (4) belonging to the same sub-channel,
   - calculating a mean pilot channel estimate,
   - correcting the received pilot sub carrier channel estimates with a set of different time shifts,
   - calculating the standard deviation of the corrected pilot sub carrier channel estimates from the mean pilot channel estimate for each time shift,
   - selecting the time shift showing the minimum standard deviation, and
   - applying said time shift showing the minimum standard deviation to the received data sub carriers on said sub-channel.

3. Method according to claim 1 or 2, **characterized in that** correcting the received pilot sub carriers (4) with a set of different time shifts, calculating the standard deviation of the corrected pilot sub carriers (4) for each time shift, selecting the time shift showing the minimum standard deviation, and applying said time shift to the received data sub carriers (4) is performed per subscriber station instead of per sub-channel.

4. Method according to claim 1, 2 or 3, **characterized in**
that the set of different time shifts used to correct the pilot sub carriers (4) lies within an expected tolerance.

5. Method according to one of the previous claims, **characterized in**
that first of all a Fast Fourier Transformation (FFT) is performed.

6. Method according to claim 5, **characterized in**
that applying said time shift to the received data sub carriers (5) is either done by shifting the FFT window to the appropriate position given by the selected time shift showing the minimum standard deviation, or the FFT output is corrected with the selected time shift showing the minimum standard deviation.

7. Method according to one of the previous claims, **characterized in**
that a modulation of the pilot sub carriers (4) is removed before the mean pilot is determined.

8. Method according to one of the previous claims, **characterized in**
that a fine correction for the symbol timing is performed in order to correct deviations caused by sample inaccuracy in the order of a fraction of the sampling interval.

9. Method according to claim 8, **characterized in**
that the fine correction is obtained from the slope of the linear regression of the phase angels of the pilot sub carriers (4) vs. the sub carrier frequency.

10. Method according to claim 8 or 9, **characterized in**
that to fine correct, the pilot sub carriers (4) corrected with the selected time shift are rotated around the origin with the inverse phase angle of the mean pilot in order to have their mean value on the positive real axis before determining the slope of the linear regression of the phase angles vs. the sub carrier frequency.

11. Method according to claim 8 or 9, **characterized in**
that to fine correct, the imaginary part of the pilot sub carriers (4) vs. the sub carrier frequency is used.

12. Method according to one of the claims 8 to 11, **characterized in**
that fine correction takes place by determining and applying said fine correction after determining and applying the time shift showing the minimum standard deviation to the received data sub carriers (5).

13. Method according to one of the previous claims, **characterized in**
that during transmission, the symbol timing is monitored and tracked on the receiver side in order to detect, if the symbol timing exceeds a given tolerance, and in case of exceeding a given tolerance, ranging is adjusted on the transmitter side.

14. OFDMA base station to be used to execute the method according to one of the previous claims, **characterized by**
means to correct the received pilot sub carriers (4) with a set of different time shifts,

   - means to calculate the standard deviation of the corrected pilot sub carriers (4) for each time shift,
   - means to select the time shift showing the minimum standard deviation, and
   - means to apply said time shift to received data sub carriers (5) on said sub-channel.

15. OFDMA base station according to claim 14, **characterized by**
means to perform a FFT.

16. Computer program product stored on a computer usable medium comprising computer readable program means for causing a computer to perform the method of anyone of the claims 1 to 13, when said computer program product is executed on a computer.

**Amended claims in accordance with Rule 86(2) EPC.**

1. Method for detecting symbol timing in an OFDMA system, wherein a sub-channel comprises several groups (1) of sub carriers (2) spread over the frequency band, each group (1) of sub carriers (2) comprising at least one pilot carrier (4), said method being **characterized by** the following steps:

- determining a mean pilot from all received pilot sub carriers (4) belonging to the same sub-channel,
- correcting the received pilot sub carriers (4) with a set of different time shifts,
- calculating the standard deviation of the corrected pilot sub carriers (4) from the mean pilot for each time shift,
- selecting the time shift showing the minimum standard deviation, and
- applying said time shift to correct received data sub carriers (5) on said sub-channel.

**2.** Method according to claim 1, **characterized in**
**that** instead of the pilot sub carriers (4) their channel estimates ($H_{[i,j]}$) are considered by performing the following steps:

- calculation of channel estimates ($H_{[i,j]}$) for all pilot sub carriers (4) belonging to the same sub-channel,
- calculating a mean pilot channel estimate,
- correcting the received pilot sub carrier channel estimates with a set of different time shifts,
- calculating the standard deviation of the corrected pilot sub carrier channel estimates from the mean pilot channel estimate for each time shift,
- selecting the time shift showing the minimum standard deviation, and
- applying said time shift showing the minimum standard deviation to the received data sub carriers on said sub-channel.

**3.** Method according to claim 1 or 2, **characterized in**
**that** correcting the received pilot sub carriers (4) with a set of different time shifts, calculating the standard deviation of the corrected pilot sub carriers (4) for each time shift, selecting the time shift showing the minimum standard deviation, and applying said time shift to the received data sub carriers (4) is performed per subscriber station instead of per sub-channel.

**4.** Method according to claim 1,2 or 3, **characterized in**
**that** the set of different time shifts used to correct the pilot sub carriers (4) lies within an expected tolerance.

**5.** Method according to one of the previous claims, **characterized in**
**that** first of all a Fast Fourier Transformation (FFT) is performed.

**6.** Method according to claim 5, **characterized in**
**that** applying said time shift to the received data sub carriers (5) is either done by shifting the FFT window to the appropriate position given by the selected time shift showing the minimum standard deviation, or the FFT output is corrected with the selected time shift showing the minimum standard deviation.

**7.** Method according to one of the previous claims, **characterized in**
**that** a modulation of the pilot sub carriers (4) is removed before the mean pilot is determined.

**8.** Method according to one of the previous claims, **characterized in**
**that** a fine correction for the symbol timing is performed in order to correct deviations caused by sample inaccuracy in the order of a fraction of the sampling interval, whereas
the fine correction is obtained from the slope of the linear regression of the phase angels of the pilot sub carriers (4) vs. the sub carrier frequency.

**9.** Method according to one of the previous claims, **characterized in**
**that** a fine correction for the symbol timing is performed in order to correct deviations caused by sample inaccuracy in the order of a fraction of the sampling interval, further **characterized in that**
to fine correct, the pilot sub carriers (4) corrected with the selected time shift are rotated around the origin with the inverse phase angle of the mean pilot in order to have their mean value on the positive real axis before determining the slope of the linear regression of the phase angles vs. the sub carrier frequency.

**10.** Method according to one of the claims 1 to 8, **characterized in**
**that** a fine correction for the symbol timing is performed in order to correct deviations caused by sample inaccuracy in the order of a fraction of the sampling interval, further **characterized in that**
to fine correct, the imaginary part of the pilot sub carriers (4) vs. the sub carrier frequency is used.

**11.** Method according to one of the claims 8 to 10, **characterized in**
**that** fine correction takes place by determining and applying said fine correction after determining and applying the time shift showing the minimum standard deviation to the received data sub carriers (5).

**12.** Method according to one of the previous claims, **characterized in**
**that** during transmission, the symbol timing is monitored and tracked on the receiver side in order to detect, if the symbol timing exceeds a given tolerance, and in case of exceeding a given tolerance, ranging is adjusted on the transmitter side.

**13.** OFDMA base station to be used to execute the method according to one of the previous claims, **characterized by**

- means to determine a mean pilot from all received pilot sub carriers (4) belonging to the same sub-channel,
- means to correct the received pilot sub carriers (4) with a set of different time shifts,
- means to calculate the standard deviation of the corrected pilot sub carriers (4) from the mean pilot for each time shift,
- means to select the time shift showing the minimum standard deviation, and
- means to apply said time shift to received data sub carriers (5) on said sub-channel.

**14.** OFDMA base station according to claim 13, **characterized by**

- means to perform a FFT.

**15.** Computer program product stored on a computer usable medium comprising computer readable program means for causing a computer to perform the method of anyone of the claims 1 to 12, when said computer program product is executed on a computer.

```
                    ┌─────────────────────────┐
                    │          a)             │
                    │   multiplying pilots    │
                    │   with nominal values   │
                    └─────────────────────────┘
                                 │
                                 ▼
                    ┌─────────────────────────┐
                    │          b)             │
                    │  determining mean pilot │
                    │     among all pilots    │
                    └─────────────────────────┘
                                 │
                                 ▼
                    ┌─────────────────────────┐
                    │          c)             │
                    │   correcting pilots with│
                    │     set of time shifts  │
                    └─────────────────────────┘
                                 │
                                 ▼
                    ┌─────────────────────────┐
                    │          d)             │
                    │ calculating standard de-│
                    │viation of pilots from mean│
                    │  pilot for all time shifts│
                    └─────────────────────────┘
                                 │
                                 ▼
                    ┌─────────────────────────┐
                    │          e)             │
                    │  determining time shift │
                    │ with minimum standard   │
                    │  deviation for all pilots│
                    └─────────────────────────┘
                                 │
                                 ▼
                    ┌─────────────────────────┐
                    │          f)             │
                    │    applying time shift  │
                    │  with minimum standard  │
                    │ deviation on FFT output │
                    └─────────────────────────┘
```

Fig: 1

Fig: 2

Fig: 3

fft output / ifft input   (->channel coefficient per subcarrier)

mean pilot

Fig: 4

Mean square deviation vs delay correction

optimum symbol timing instant

Fig: 5

Fig: 6

**European Patent Office**

**EUROPEAN SEARCH REPORT**

Application Number

EP 06 30 0097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/001760 A (THOMSON LICENSING S.A; BELOTSERKOVSKY, MAXIM BORISOVICH; DEMOULIN, VIN) 3 January 2003 (2003-01-03)<br>* abstract *<br>* page 2, line 19 - page 3, line 23 *<br>* page 6, line 19 - page 10 *<br>* figures 1-6 *<br>----- | 1,3-16 | INV.<br>H04L27/26 |
| A | MATIC D ET AL: "OFDM SYNCHRONISATION BASED ON THE PHASE ROTATION OF SUB-CARRIERS"<br>VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US,<br>vol. VOL. 2 OF 3. CONF. 51, 2000, pages 1260-1264, XP000941308<br>ISBN: 0-7803-5719-1<br>* page 1260 - page 1264 *<br>----- | 1-16 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| Berlin | 29 June 2006 | GONZALEZ GUTIERREZ |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 06 30 0097

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2006

| Patent document cited in search report | | Publication date | Patent family member(s) | | Publication date |
|---|---|---|---|---|---|
| WO 03001760 | A | 03-01-2003 | BR | 0117039 A | 27-07-2004 |
| | | | CN | 1520669 A | 11-08-2004 |
| | | | EP | 1400083 A1 | 24-03-2004 |
| | | | JP | 2004531168 T | 07-10-2004 |
| | | | MX | PA03011643 A | 02-04-2004 |

EPO FORM P0459

For more details about this annex : see Official Journal of the European Patent Office, No. 12/82